# EUROPÄISCHE PATENTSCHRIFT

(11) **EP 1 860 268 B1**
(45) Veröffentlichungstag und Bekanntmachung des Hinweises auf die Patenterteilung: **08.02.2012**
(21) Anmeldenummer: 07003094.5
(22) Anmeldetag: 14.02.2007
(51) Int. Cl.: E06B 3/54

(54) **Vorrichtung zur Halterung einer Glasscheibe**
Device for mounting a sheet of glass
Dispositif destiné à la fixation d'une plaque de verre

(30) Priorität: 01.03.2006 DE 202006003150 U
(43) Veröffentlichungstag der Anmeldung: 28.11.2007
(73) Patentinhaber: Feigl, Bernhard, 6911 Lochau (AT)
(72) Erfinder: Feigl, Bernhard, 6911 Lochau (AT)
(74) Vertreter: Engelhardt, Volker

(56) Entgegenhaltungen:
- WO-A1-02/057558
- DE-A1- 19 523 674
- DE-A1- 19 727 200
- DE-A1-102004 031 799
- DE-U1- 20 006 212

## Beschreibung

Die Erfindung bezieht sich auf eine Vorrichtung zur Halterung einer Glasscheibe nach dem Oberbegriff des Patentanspruches 1.

Aus der DE 197 27 200 C2 ist eine solche Befestigungsmöglichkeit für eine Glasscheibe, beispielsweise an einer Gebäudefassade, zu entnehmen. Das Zwischenglied ist dabei üblicherweise aus Kunststoff hergestellt und soll den im Bereich der Bohrung liegenden Randbereich der Glasscheibe vor dem Kontakt eines harten Bauteils, beispielsweise einer Schraube aus Metall, schützen.

Das die Glasscheibe durchgreifende Befestigungsglied darf nämlich nicht unmittelbar in Kontakt mit der Glasscheibe gelangen, denn aufgrund der notwendigen Vorspannkräfte, die durch diese erzeugt und übertragen werden, würde die Glasscheibe durch das Befestigungsglied zerstört werden.

Das Zwischenglied weist eine Außenkontur auf, die an die Innenkontur der Bohrung, die in die Glasscheibe eingearbeitet ist, angepasst ist, so dass das Zwischenglied spielfrei an der Innenfläche der Bohrung anliegt und diese vollständig abdeckt.

Die Bohrung weist zwei Abschnitte auf, nämlich einen sich in Richtung der Gebäudefassade konisch verjüngenden Querschnitt und einen Abschnitt, dessen

Durchmesser in Längsrichtung der Bohrung konstant gehalten ist. Das Zwischenglied besteht deshalb aus einem Kegelstumpf, an den ein Ring oder Hülse angeformt ist, der in einen elastisch verformbaren Kragen übergeht. Der Kragen kann aufgrund seiner Materialeigenschaften derart zusammengefaltet werden, dass dieser durch die Bohrung der Glasscheibe hindurchgesteckt werden kann und sich auf der dem Kegelstumpf gegenüberliegenden Seite der Glasscheibe wieder auseinanderfaltet und somit im Randbereich der Bohrung an der Glasscheibe auf deren der Gebäudefassade zugewandten Oberfläche anliegt.

Mittels des die Bohrung und das Zwischenglied durchgreifenden Befestigungsgliedes in Form der Schraube wird demnach die Glasscheibe an der Gebäudefassade arretiert und das Zwischenglied wird durch die Schraube an die Innenfläche der sich konisch in Richtung der Gebäudefassade verjüngenden Bohrung abgestützt, so dass das Zwischenglied, insbesondere der Teil des Zwischengliedes, der zwischen der Gebäudefassade und der Glasscheibe, also der Kragen, angeordnet ist, verspannt wird. Demnach stützt der kegelstumpfartige Abschnitt des Zwischengliedes die Glasscheibe vor dem unmittelbaren Kontakt mit dem Schraubenkopf und der auseinanderfaltbare Kragen des Zwischengliedes liegt zwischen der Gebäudefassade und der Glasscheibe, so dass diese mit Abstand parallel zu der Gebäudefassade verläuft.

Als nachteilig bei diesem Stand der Technik hat sich herausgestellt, dass die geometrischen Abmessungen des Zwischengliedes exakt an die Materialstärke und die geometrische Ausbildung der Durchgangsbohrung anzupassen sind, denn ein ausreichender und zuverlässiger Sitz des Zwischengliedes in der Bohrung ist notwendig, um den Rand der Glasscheibe im Bereich der Durchgangsbohrung vollständig vor dem Kontakt mit dem Befestigungsglied, also der metallischen Schraube, zu schützen.
Aufgrund der Herstellungsverfahren für Glasscheiben lässt sich jedoch eine gleichmäßige und vorbestimmte Materialstärke der Glasscheibe im Bereich einer Bohrung nicht bewerkstelligen, so dass diese oftmals derart großen Schwankungen unterliegt, die dazu führen, dass das Zwischenglied entweder in seiner Längenabmessung zu klein oder zu groß bemessen ist. Dies führt jedoch dazu, dass insbesondere der Kragen des Zwischengliedes zu flach oder zu steil an der Glasscheibe anliegt, so dass diese nicht ausreichend abgedeckt ist, um die durch die Befestigung der Glasscheibe an der Gebäudefassade entstehenden Spannkräfte aufzunehmen und abzustützen. Daher sind oftmals unterschiedlich ausgebildete Zwischenglieder einzusetzen.

Des Weiteren ist es notwendig, dass die Bohrung zumindest einen Abschnitt aufweist, dessen Querschnitt sich konisch in Richtung der Gebäudefassade verjüngt, denn durch diesen Bereich der Bohrung wird die Glasscheibe über die Schraube an der Gebäudefassade gehalten. Bei einer konstanten Durchmesserausbildung der Bohrung würde nämlich der Kopf der Schraube auf der Oberfläche der Glasplatte anliegen und könnte nicht in diese eingeführt und mittels einer Abdeckscheibe verblendet werden.

Es ist daher Aufgabe der Erfindung, eine Vorrichtung der eingangs genannten Gattung derart weiterzubilden, dass mit einem Zwischenglied der Randbereich der Bohrung der Glasscheibe geschützt werden kann, unabhängig davon, welche Materialstärke die Glasscheibe im Bereich der Bohrung aufweist. Das Zwischenglied soll sich dabei an die geometrischen Gegebenheiten der Glasscheibe anpassen und diese zuverlässig vor dem Kontakt mit harten, die Glasscheibe unter Umständen zerstörenden Bauteile schützen.

Die DE 200 06 212 U offenbart sämtliche technischen Merkmale des Oberbegriffs von Patentanspruch 1.

Diese Aufgabe wird erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass zwischen der Hülse und dem Kragen ein Balg oder eine elastisch verformbare Zone vorgesehen ist, kann der Abstand zwischen der Hülse und dem Kragen individuell an die Materialstärke der Glasscheibe im Bereich der Bohrung angepasst werden, denn durch die Dehn- und Verformbarkeit des Balges bzw. der Zone können unterschiedliche Materialstärken der Glasscheibe ausgeglichen werden.

Folglich liegt das gesamte Zwischenglied spielfrei in dem Bereich der Bohrung an der Glasscheibe an, so dass diese durch das Zwischenglied abgedeckt und daher vor Beschädigungen, insbesondere durch harte Gegenstände, geschützt ist.

Es ist besonders zweckmäßig, wenn das Befestigungsglied durch ein Stabilisierungsglied, das in das Zwischenglied eingeschoben ist und an diesem spielfrei anliegt, abgestützt wird, denn dadurch werden die von dem Befestigungsglied erzeugten Spannkräfte zur Arretierung der Glasscheibe an der Gebäudefassade durch das Stabilisierungsglied auf das Zwischenglied großflächig an die Glasscheibe übertragen. Ein unmittelbarer Kontakt zwischen dem aus Metall hergestellten Befestigungsglied in Form einer Schraube mit der Glasscheibe wird dadurch verhindert.

Es ist auch möglich, zwei Stabilisierungsglieder von zwei Seiten in die Bohrung der Glasscheibe einzustecken, so dass die Glasscheibe über das Befestigungsglied an Profilträgern oder Abstandshaltern befestigbar ist und durch diese abgestützt wird.

In der Zeichnung ist ein erfindungsgemäßes Ausführungsbeispiel dargestellt, das nachfolgend näher erläutert wird. Im einzelnen zeigt:
- Figur 1: eine Vorrichtung zur Halterung einer Glasscheibe, in die eine Bohrung eingearbeitet ist, mit einem den Randbereich der Bohrung der Glasscheibe abdeckenden Zwischenglied und einem in dieses eingeschobenen Stabilisierungsglied, in Explosionsdarstellung,
- Figur 2: die Vorrichtung gemäß Figur 1 im zusammengebauten Zustand, im Schnitt ,
- Figur 3: die Vorrichtung gemäß Figur 1, die an einem Profilträger die Glasscheibe abstützt, im Schnitt,
- Figur 4: die Vorrichtung gemäß Figur 1, die an einem Abstandshalter angebracht ist, der zwischen der Glasscheibe und der Gebäudefassade angeordnet ist, im Schnitt,
- Figur 5: die Vorrichtung gemäß Figur 4 mit einem andersartig ausgebildeten Abstandshalter, im Schnitt, an dem ein I-Profilträger angebracht ist,
- Figur 6a: das Zwischenglied gemäß Figur 1, von unten,
- Figur 6b: das Zwischenglied gemäß Figur 6a, im Schnitt,
- Figur 7a: eine Ausbildungsvariante des Zwischengliedes gemäß Figur 6a, in dem vier Ausnehmungen eingearbeitet sind, von unten und
- Figur 7b: das Zwischenglied gemäß Figur 7a im Schnitt.

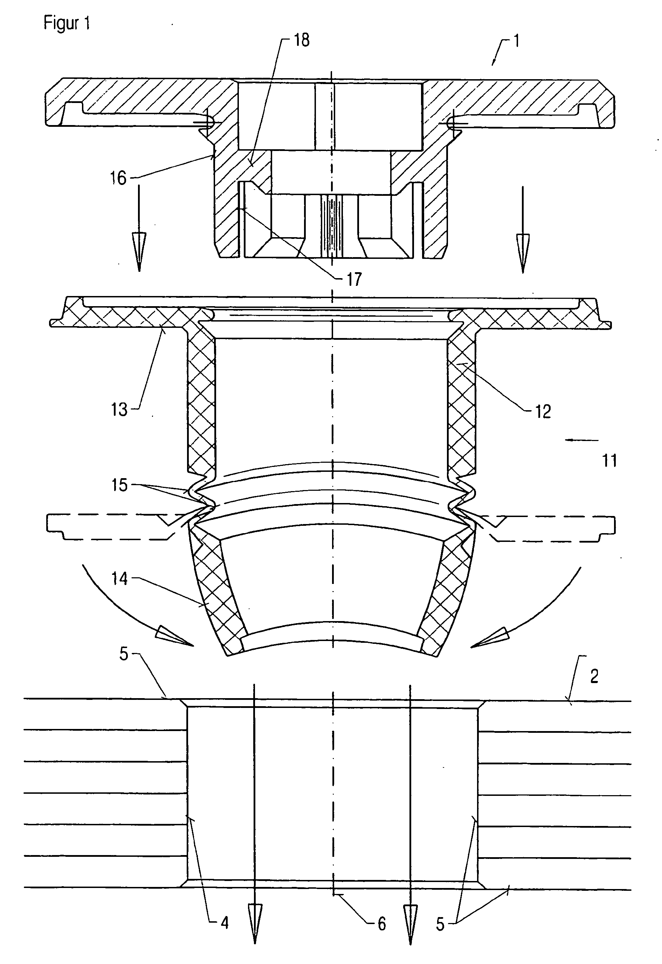

In Figur 1 ist eine Vorrichtung 1 zur Halterung einer Glasscheibe 2 gezeigt, in die eine Bohrung 4 eingearbeitet ist. Der von der Bohrung 4 gebildete Rand ist mit der Bezugsziffer 5 versehen und soll durch ein Zwischenglied 11 abgedeckt werden, so dass der Rand 5 der Glasscheibe 2 vor einem aus Metall gefertigten Stabilisierungsglied 16 geschützt ist. Bekanntlich ist der Kontakt zwischen einem harten Bauteil und Glas zu vermeiden, denn durch das harte Bauteil wird das Glas beschädigt oder zerstört. Das Zwischenglied 11 ist daher aus einem elastisch verformbaren Material, beispielsweise aus Kunststoff, hergestellt.

Das Zwischenglied 11 weist eine Hülse 12 auf, die in die Bohrung 4 der Glasscheibe 2 eingesetzt wird. Auf einer Seite der Hülse 12 ist ein etwa senkrecht abstehender Kragen 13 angeformt, durch den der äußere Rand 5 im Bereich der Bohrung 4 abgedeckt wird.

An der anderen Seite der Hülse 12 ist ein Balg 14 angebracht, der zwei V-förmig ausgestaltete Profilglieder 15 umfasst. Insbesondere die Profilglieder 15 sind derart dehnbar, dass der Balg 14 verkleinert werden kann, um diesen durch die Bohrung 4 der Glasscheibe 2 hindurchzuschieben. Auf der anderen Seite der Glasscheibe 2 entfaltet sich der Balg 14 wiederum, so dass dieser auf dem von der Bohrung 4 gebildeten Rand 5 anliegt und daher dem Kragen 13 gegenüberliegend verläuft.

Das Stabilisierungsglied 16 weist eine Durchgangsbohrung 17 auf, in die eine ringförmig ausgebildete Auflagefläche 18 hineinragt.

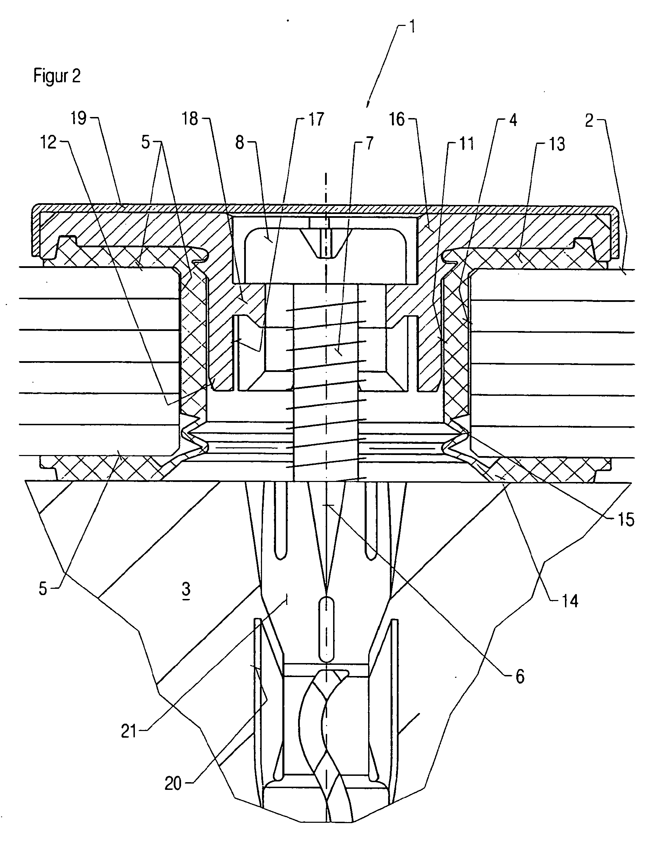

Aus Figur 2 ist der zusammengebaute Zustand der Vorrichtung 1 zu entnehmen. Zunächst wird das Zwischenglied 11 in die Bohrung 4 der Glasscheibe 2 eingeschoben, so dass die Hülse 12 des Zwischengliedes 11 innerhalb der Bohrung 4 angeordnet ist und der Kragen 13 und der Balg 14 im Rand 5 auf den gegenüberliegenden Seiten der Glasscheibe 2 verlaufen. Das Stabilisierungsglied 16 ist in das Zwischenglied 11, insbesondere in die Hülse 12, eingesteckt. Ein als Schraube ausgebildetes Befestigungsglied 7 durchgreift das Stabilisierungsglied 16 und das Zwischenglied 11 und ragt im Bereich des Balges 14 des Zwischengliedes 11 aus diesem heraus.

Da die Glasscheibe 2 an einer Wand 3 gehalten werden soll, ist in diese eine Bohrung 20 eingearbeitet, in die ein Befestigungsdübel 21 eingesteckt ist, durch den die jeweilige Schraube 7 in der Wand 3 fixiert wird.

Der Kopf 8 der Schraube 7 liegt im montierten Zustand dabei an der Auflagefläche 18 des Stabilisierungsgliedes 16 an, so dass durch diese eine in Richtung der Längsachse 6 der Bohrung 4 gerichtete Vorspannkraft entsteht, durch die die Glasscheibe 2 an der Wand 3 arretiert ist. Das im Querschnitt U-förmig ausgebildete Stabilisierungsglied 16 umschließt demnach den Kragen 13 und den Großteil der Hülse 12 des Zwischengliedes 11 und tritt daher nicht in unmittelbaren Kontakt mit der Glasscheibe 2.

Der Balg 14 ist zwischen der Glasscheibe 2 und der Wand 3 angeordnet, so dass die Glasscheibe 2 nicht unmittelbar mit der Außenseite der Wand 3 in Berührung gelangt. Durch die Glasscheibe 2 soll beispielsweise eine Glas-Gebäudefassade herstellbar sein.

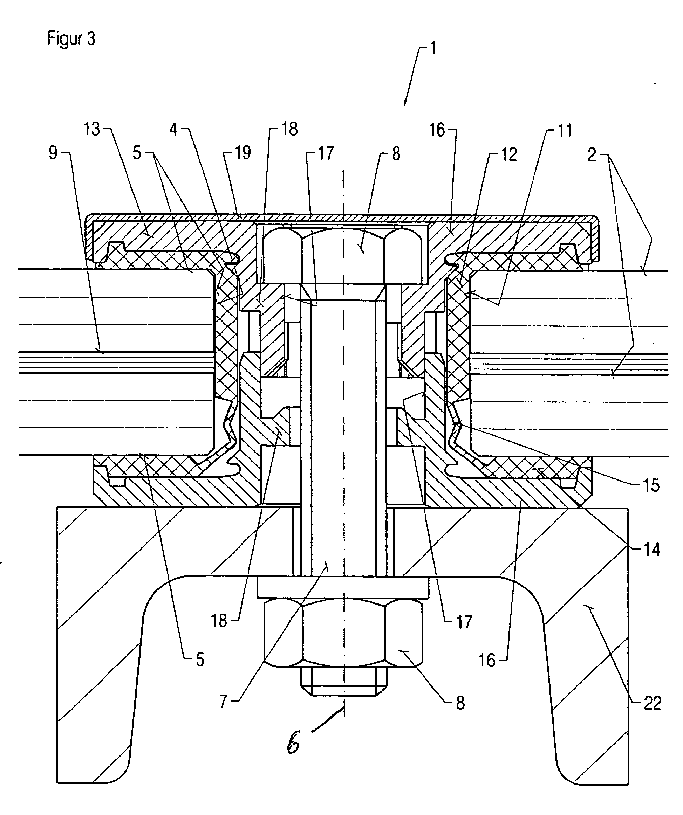

Die V-förmig verlaufenden Profilglieder 15 des Balges 14 sind dehnbar ausgebildet, so dass durch diese eine Anpassung der Länge der Hülse 12 an die Materialstärke der Glasscheibe 2 im Bereich der Bohrung 4 vorgenommen werden kann, wie dies beispielsweise in Figur 3 dargestellt ist. Die in Figur 3 gewählte Glasscheibe 2 besteht nämlich aus zwei Teilstücken, die durch eine Klebefolie 9 miteinander fest verbunden sind. Die Materialstärke der beiden Glasscheiben 2 ist daher etwa doppelt so groß bemessen, wie die einzelne Glasscheibe 2 der Figur 2, so dass die Profilglieder 15 nahezu vollständig gestreckt sind. Gleichwohl deckt der Balg 14 die Glasscheibe 2 im Rand 5 der Bohrung 4 ab, so dass dieser nicht in unmittelbaren Kontakt gelangen kann mit dem zweiten eingesteckten Stabilisierungsglied 16.

Das zweite vorgesehene Stabilisierungsglied 16 dient als Anlagefläche für einen U-förmig ausgebildeten Profilträger 22, der als Unterkonstruktion zur Anbringung der Glasscheibe 2 verwendet wird. Die beiden in der Bohrung 4 der Glasscheibe 2 verlaufenden Stabilisierungsglieder 16 sind derart ausgebildet, dass das von oben eingesetzte Stabilisierungsglied 16 im Bereich der Bohrung 4 im Durchmesser kleiner bemessen ist, als der Innendurchmesser des von unten eingesetzten Stabilisierungsgliedes 16, so dass die beiden Stabilisierungsglieder 16 bereichsweise radial aneinander anliegen und sich daher gegenseitig im Inneren der Bohrung 4 abstützen. Die in Längsrichtung 6 wirkenden Vorspannkräfte werden demnach durch die beiden Stabilisierungsglieder 16 nicht behindert.

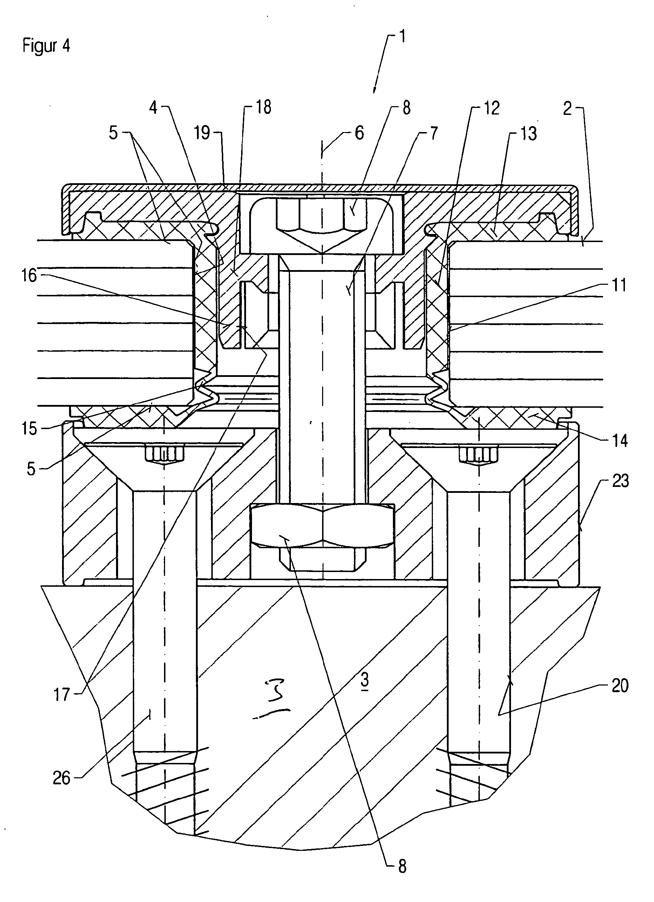

Figur 4 kann entnommen werden, dass die Schraube 7 an einem Abstandshalter 23 arretiert ist, in den zwei oder auch mehrere Befestigungsschrauben 26 eingesetzt sind, die in der Wand 3 in Bohrungen 20 eingeschraubt sind.

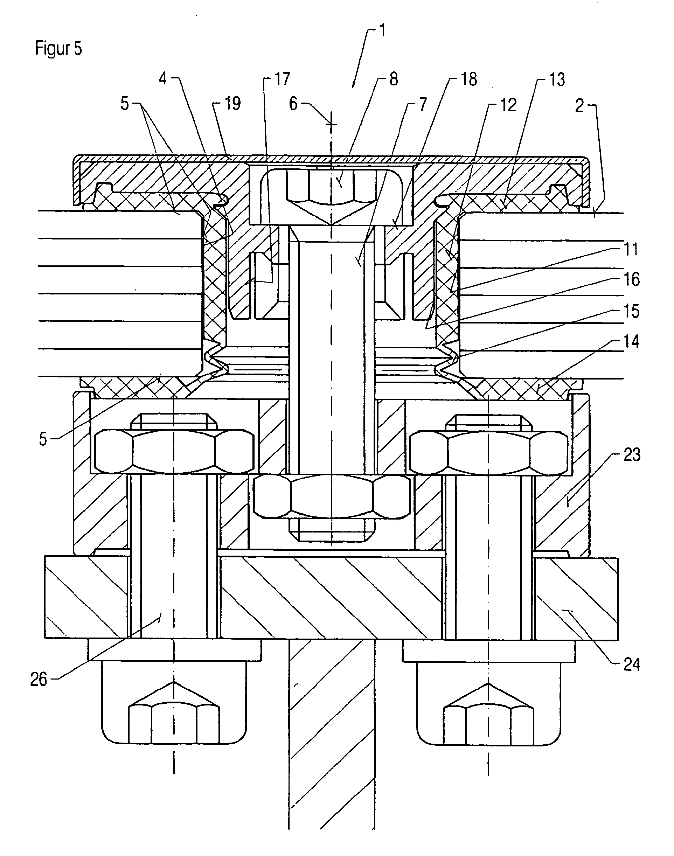

Aus Figur 5 ist der Abstandhalter 23 mit einem I-Profilträger 24 über die Befestigungsschrauben 26 verbunden. Der I-Profilträger 24 dient als Unterkonstruktion zur Aufnahme der Glasscheibe 2.

Der Abstandhalter 24 ist nicht rotationssymmetrisch ausgebildet, denn die einzelnen Abschnitte, in denen die Befestigungsschrauben 26 verlaufen, weisen Aussparungen auf, in denen Muttern oder andere Halteglieder angeordnet sind, um die Befestigungsschrauben 26 zuverlässig mit dem Abstandshalter 23 zu verbinden. Die Bereiche des Abstandshalters 23, die von den Befestigungsschrauben 26 nicht durchgriffen sind, liegen daher auf der Außenseite des Balges 14 an.

Um die Außenfassade ästhetisch formschön auszugestalten, werden die von außen sichtbaren Bauteile mittels einer Sichtschutzblende 19 abgedeckt. Diese kann beispielsweise aus Edelstahl hergestellt sein, um eine entsprechende optische Wirkung zu erzielen. Demnach ist das Stabilisierungsglied 16 durch die Sichtschutzblende 19 verdeckt.

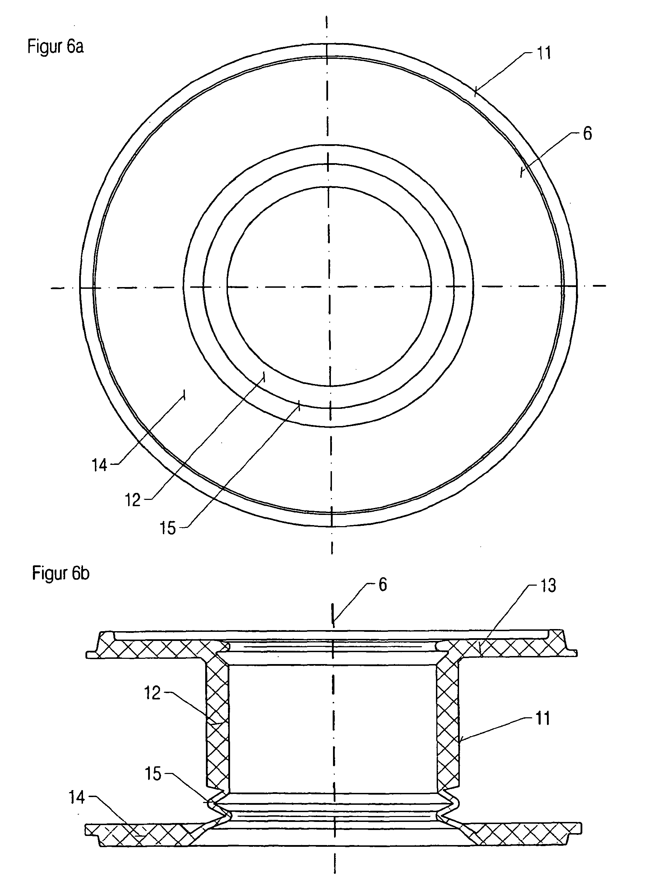

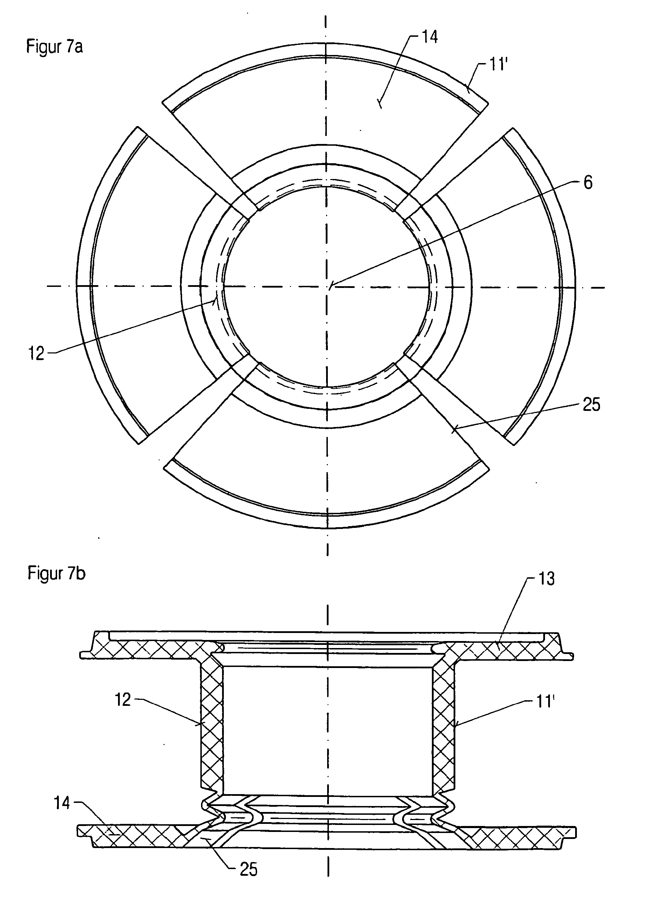

In den Figuren 6a und 6b ist die übliche konstruktive Ausgestaltung des Zwischengliedes 11 gezeigt. In den Figuren 7a und 7b sind in das Zwischenglied 11 vier Ausnehmungen 25 eingearbeitet, die das Zusammenfalten des Balges 14 erleichtern, denn somit lässt sich der Balg 14 mit einer geringeren Kraft verkleinern, um diesen durch die Bohrung 4 hindurchzustecken.

## Patentansprüche

1. Vorrichtung (1) zur Halterung einer Glasscheibe (2) an einer Wand (3) oder dgl., mittels eines eine in die Glasscheibe (2) eingearbeitete Bohrung (4) durchgreifenden Befestigungsgliedes (7), beispielsweise in Form einer Schraube, umfassend ein Zwischenglied (11) mit einer Hülse (12), mit einem Kragen (13) und mit einem Balg (14) oder einer elastischen Zone, wobei im eingebauten Zustand die Hülse (12) innerhalb der Bohrung (4) angeordnet ist und der Kragen (13) und der Balg (14) oder die Zone im Rand auf der gegenüberliegenden Seiten der Glasscheibe (2) verlaufen, so dass der durch die Bohrung (4) gebildete Rand (5) der Glasscheibe (2) durch das Zwischenglied (11) abgedeckt ist, und wobei der Kragen (13) etwa senkrecht von der Hülse (12) absteht,
**dadurch gekennzeichnet,**
**dass** zwischen Balg (14) oder Zone und Hülse (12) mindestens zwei im Querschnitt V-förmig ausgebildete Profilglieder (15) angeordnet sind, mittels derer die Länge der in die Bohrung (4) eingreifenden Hülse (12) an die Materialstärke der Glasscheibe (2) anpassbar ist.

2. Vorrichtung nach Anspruch 1,
**dadurch gekennzeichnet,**
**dass** die Höhe des Profilgliedes (15) in etwa der Materialstärke der Hülse (12) entspricht.

3. Vorrichtung nach Anspruch 1 oder 2,
**dadurch gekennzeichnet,**
**dass** die Bohrung (4) und die Hülse (12) einen konstanten Durchmesser aufweisen.

4. Vorrichtung nach einem oder mehreren der vorgenannten Ansprüche,
**dadurch gekennzeichnet,**
**dass** der Balg (14) oder die Zone aus einem elastisch verformbaren oder biegsamen Material, vorzugsweise aus Kunststoff, hergestellt ist.

5. Vorrichtung nach einem oder mehreren der vorgenannten Ansprüche,
**dadurch gekennzeichnet,**
**dass** in die Hülse (12) mindestens ein Stabilisierungsglied (16) eingesteckt ist, das auf dem Kragen (13) und in der Hülse (12) spielfrei anliegt.

6. Vorrichtung nach Anspruch 5,
**dadurch gekennzeichnet,**
**dass** in dem Stabilisierungsglied (16) eine Durchgangsbohrung (17) eingearbeitet ist, die von dem Befestigungsglied (7) durchgriffen ist, und dass der Kopf (8) des Befestigungsglieds (7) im Bereich der Durchgangsbohrung (17) auf einer ringförmigen Anlagefläche (18) spielfrei anliegt.

7. Vorrichtung nach Anspruch 6,
**dadurch gekennzeichnet,**
**dass** die nach außen weisenden Oberflächen der Stabilisierungsglieder (16) plan ausgebildet sind und dass auf diese eine Sichtschutzscheibe (19) oder ein Profilträger (22,23, 24) aufsetzbar sind, der von dem Befestigungsmittel (7) durchgriffen ist.

8. Vorrichtung nach Anspruch 7,
**dadurch gekennzeichnet,**
**dass** der Profilträger (22, 24) im Querschnitt U- oder I-förmig oder als rechteckförmiger Abstandshalter (23) ausgebildet ist und dass die Glasscheibe (2) am Profilträger (22, 23, 24) verspannt gehalten ist.

9. Vorrichtung nach Anspruch 8,
**dadurch gekennzeichnet,**
**dass** der Abstandshalter (23) als Zwischenglied vorgesehen ist, mit dem ein oder mehrere Profilträger (22, 24) verbindbar sind.

## Claims

1. A device (1) for mounting a sheet of glass (2) on a wall (3) or the like by means of a fastening element (7) which passes through a hole (4) worked into the sheet of glass (2), in which case the fastening element (7) takes the form of a bolt, for example, comprising an intermediate element (11) with a sleeve (12), a collar (13) and a bellows (14) or a flexible zone, with the sleeve (12) arranged in the hole (4) in the installation condition and the collar (13) and the bellows (14) or the edge of the zone running along opposite sides of the sheet of glass (2) covered by the intermediate element (11), and with the collar (13) protruding approximately at right angles from the sleeve (12),
**characterised in that,**
at least two profile elements (15) with a V-shaped cross section are arranged between the bellows (14) or zone and the sleeve (12), by means of which elements (15) the length of the sleeve inserted in the hole (4) can be adapted to the material thickness of the sheet of glass (2).

2. The device in accordance with Claim 1,
**characterised in that,**
the height of the profile element (15) approximately corresponds to the material thickness of the sleeve (12).

3. The device in accordance with Claim 1 or 2,
**characterised in that,**
the hole (4) and the sleeve (12) have a constant diameter.

4. The device in accordance with one or more of the aforementioned claims,
**characterised in that,**
the bellows (14) or the zone is manufactured from an elastically deformable or flexible material, preferably plastic.

5. The device in accordance with one or more of the aforementioned claims,
**characterised in that,**
at least one stabilisation element (16) is inserted into the sleeve (12), and the stabilisation element (16) makes contact with the collar (13) and in the sleeve (12) without play.

6. The device in accordance with Claim 5,
**characterised in that,**
a through-hole (17) is worked into the stabilisation element (16), the fastening element (7) passes through the through-hole (17) and that the head (8) of the fastening element (7) makes contact with a ringshaped contact surface (18) in the area of the through-hole (17) without play.

7. The device in accordance with Claim 6,
**characterised in that,**
the outwardly facing surfaces of the stabilisation elements (16) are flat and that a privacy panel (19) or a profile carrier (22, 23, 24) can be mounted on these surfaces, with the fastening element (7) passing through them.

8. The device in accordance with Claim 7,
**characterised in that,**
the profile carrier (22, 24) is configured with a U or I-shaped cross section or as a rectangular spacer (23), and that the sheet of glass (2) is held clamped against the profile carrier (22, 23, 24).

9. The device in accordance with Claim 8,
**characterised in that,**
the spacer (23) is provided as an intermediate element, to which one or more profile carriers (22, 24) can be connected.

## Revendications

1. Dispositif (1) destiné à la fixation d'une plaque de verre (2) sur une paroi (3) etc., moyennant un élément de fixation (7) p. ex. sous la forme d'une vis, passant à travers un alésage (4) pratiqué dans la plaque de verre (2), comprenant un élément intermédiaire (11) avec une douille (12), un collet (13) et avec un soufflet (14) ou une zone élastique, la douille (12) se trouvant, en état monté, à l'intérieur de l'alésage (4) et le collet (13) ainsi que le soufflet (14) ou la zone élastique au bord sur les côtés opposés de la plaque de verre (2), de sorte que le bord (5) de la plaque de verre (2) formé par l'alésage (4) est recouvert par l'élément intermédiaire (11) et où le collet (13) saille à peu près verticalement de la douille (12),
**caractérisé en ce que**,
entre le soufflet (14) ou la zone élastique et la douille (12), il est prévu au moins deux éléments profilés (15) de section en V qui permettent d'adapter la longueur de la douille (12) s'engrenant dans l'alésage (4) à l'épaisseur de matériel de la plaque de verre (2)

2. Dispositif d'après la revendication 1,
**caractérisé en ce que**
la hauteur de l'élément profilé (15) correspond à peu près à l'épaisseur de matériel de la douille (12).

3. Dispositif d'après les revendications 1 ou 2,
**caractérisé en ce que**
l'alésage (4) et la douille (12) ont un diamètre constant.

4. Dispositif d'après une ou plusieurs des revendications précédentes,
**caractérisé en ce que**
le soufflet (14) ou la zone sont fabriqués d'un matériel élastique ou flexible, de préférence de matière synthétique.

5. Dispositif d'après une ou plusieurs des revendications précédentes,
**caractérisé en ce que**
dans la douille (12), il est inséré au moins un élément stabilisateur (16) qui porte sans jeu sur le collet (13) et dans la douille (12).

6. Dispositif d'après la revendication 5,
**caractérisé en ce que**
dans l'élément stabilisateur (16), il est pratiqué un alésage de passage (17) par lequel passe l'élément de fixation (7) et qu'au niveau de l'alésage de passage (17), la tête (8) de l'élément de fixation (7) porte sans jeu sur une face de portée annulaire (18).

7. Dispositif d'après la revendication 6,
**caractérisé en ce que**
les surfaces des éléments stabilisateurs (16) donnant vers l'extérieur sont conçues sous la forme plane et que sur celles-ci, il se laisse monter une plaque de protection (19) ou un support profilé (22, 23, 24), à travers lequel passe l'élément de fixation (7).

8. Dispositif d'après la revendication 7,
**caractérisé en ce que**
la section du support profilé (22, 24) est conçu en U ou en I ou en tant que membre d'écartement rectangulaire (23) et que la plaque de verre (2) est serrée sur le support profilé (22, 23, 24).

9. Dispositif d'après la revendication 8,
**caractérisé en ce que**
le membre d'écartement (23) est prévu en tant qu'élément intermédiaire auquel se laissent raccorder un ou plusieurs supports profilés (22, 24).
